# EUROPÄISCHE PATENTSCHRIFT

(11) **EP 3 732 850 B1**
(45) Veröffentlichungstag und Bekanntmachung des Hinweises auf die Patenterteilung: **09.02.2022**
(21) Anmeldenummer: 18827095.3
(22) Anmeldetag: 20.12.2018
(51) Int. Cl.: H04L 12/18, H04L 29/08, H04L 29/06

(54) **ECHTZEIT-KOLLABORATIONS-PLATTFORM UND VERFAHREN ZUM AUSGEBEN VON MEDIASTRÖMEN ÜBER EIN ECHTZEIT-ANSAGESYSTEM**
REAL-TIME COLLABORATION PLATFORM AND METHOD FOR OUTPUTTING MEDIA STREAMS VIA A REAL-TIME ANNOUNCEMENT SYSTEM
PLATEFORME DE COLLABORATION EN TEMPS RÉEL ET PROCÉDÉ DE SORTIE DE FLUX MULTIMÉDIAS VIA UN SYSTÈME D'ANNONCE EN TEMPS RÉEL

(30) Priorität: 29.12.2017 DE 102017131420
(43) Veröffentlichungstag der Anmeldung: 04.11.2020
(73) Patentinhaber: Unify Patente GmbH & Co. KG, 81739 München (DE)
(72) Erfinder: TOTZKE, Jürgen, 85586 Poing (DE); DEGENKOLB, Patrick, 61476 Kronberg (DE); KÄHLER, Christian, 81477 München (DE)
(74) Vertreter: Schaafhausen Patentanwälte PartGmbB
(86) Internationale Anmeldenummer: PCT/EP2018/086411
(87) Internationale Veröffentlichungsnummer: WO 2019/129667

(56) Entgegenhaltungen:
- WO-A1-2014/127787
- US-A1- 2015 229 487

## Beschreibung

Die Erfindung betrifft eine Echtzeit-Kollaborations-Plattform und ein Verfahren zum Ausgeben von Mediaströmen über ein Echtzeit-Ansagesystem.

Internet-Dienste und -Vorrichtungen, welche Endverbrauchern bereitgestellt werden, sind im Stand der Technik unter anderem dazu ausgelegt, um zur Kommunikation innerhalb von Unternehmensnetzwerken verwendet zu werden. Ein typisches Beispiel hierfür ist eine Social Software, auf deren Basis dann die sogenannte Business Social Software als eine Unternehmenskommunikationsvariante entwickelt worden ist. Hierbei wurden Features wie ein einmaliges Anmelden (single sign on SSO) für Nutzer sowie Datenzugriffskontrolle und Vertraulichkeit für Communities (z. B. für Teams) realisiert. Neben asynchroner Kommunikation, z. B. Chat, wurde die Social Software weiterhin verbessert durch Ermöglichen einer Echtzeit-Kommunikation mit einer Standardisierung von WebRTC in W3C (APIs) und IETF (Transportprotokolle), wie z. B. Audio-A/ideo-Kommunikation, woraus sich dann Echtzeit-Kollaborationsplattformen für Unternehmen entwickelt haben. Hier wurden dann beispielsweise zur Unterstützung der Team-Kollaboration in Unternehmen weiterhin Features wie Screen-Sharing und dergleichen implementiert, was die Produktivität eines Teams bei Nutzung derartiger Kollaborationsplattformen weiter verbessert hat.

Heutzutage verwendete Echtzeit-Kollaborationsplattformen werden typischerweise dazu eingesetzt, sogenannte horizontale Kommunikationsdienste bereitzustellen. Horizontale Kommunikation bedeutet eine neutrale Kommunikation über alle Organisationsstrukturen hinweg ohne spezifische Funktionen für das Unternehmens-Dienstleistungs- und -Produktspektrum. Die möglichen Integrationen und Föderationen für die kontextabhängige Anreicherung von Informationen bleiben dabei auf - beispielsweise Web-service basierten - Internetdiensten innerhalb und außerhalb des Unternehmens beschränkt.

Die US 2015/229487 A1 beschreibt ein virtuelles Kollaborations- oder Konferenzsystem für mehrere Teilnehmer. Eine Vielzahl von Multimedia Clients können mithilfe eines Applikationsservers über das System kommunizieren, wobei der Applikationsserver einen Media-Transceiver umfasst. Die WO 2014/127787 A1 offenbart ein Verfahren zur Steuerung von Datenstrukturen einer virtuellen Sitzung mit mehreren Teilnehmern über einen Kollaborationsserver.

Wünschenswert wäre jedoch, die in Unternehmen verwendeten Echtzeit-Kollaborationsplattformen über die horizontalen Kommunikationsdienste hinaus verwenden zu können.

Daher ist es eine Aufgabe der vorliegenden Erfindung, wie eine Echtzeitkollaborations-Plattform sowie ein Verfahren zum Ausgeben von Mediaströmen über ein Echtzeit-Ansagesystem erweitert werden kann.

Diese Aufgabe wird erfindungsgemäß durch eine Echtzeit-Kollaborations-Plattform mit den Merkmalen gemäß Anspruch 1 und ein Verfahren zum Ausgeben von Mediaströmen über ein Echtzeit-Ansagesystem mit den Merkmalen gemäß Anspruch 13 gelöst. Bevorzugte Weiterbildungen des erfindungsgemäßen Gegenstands sind in den Unteransprüchen definiert.

Dementsprechend wird gemäß der Erfindung eine Echtzeit-Kollaborationsplattform mit einer Kollaborations-Applikation bereitgestellt, welche angepasst ist, um es einer Anzahl von Usern zu ermöglichen, in zumindest einer Session über ein vorbestimmtes Thema miteinander über ein Netzwerk zu kommunizieren, wobei die Echtzeit-Kollaborationsplattform zumindest einen Mediaserver mit einer selektiven Weiterleitungseinheit umfasst, welche angepasst ist zum selektiven Weiterleiten von Mediaströmen gemäß einem Inhalt einer vorbestimmten Session und einer Anzahl von Clients, wobei der Mediaserver eine Schnittstelle zu Media-Gateway mit einem Echtzeit-Ansage-Adapter aufweist, über welche der Mediaserver mit einem Ansagesystem mit akustischen Ausgabevorrichtungen verbindbar ist, so dass die Mediaströme einer vorbestimmten Session über Stellvertreter-Clients an die Ausgabevorrichtungen ausgebbar sind.

Durch Vorsehen einer Schnittstelle zu einem Echtzeit-Ansage-Adapter an dem Mediaserver der Echtzeit-Kollaborationsplattform kann diese mit Hilfe eines solchen Echtzeit-Ansage-Adapters, im Folgenden auch als RTA-Adapter (Real Time Announcement) bezeichnet, mit einem Echtzeit-Ansagesystem (Real-Time Announcement System, RTA-System), welches auch bekannt ist als sogenanntes Alarm Response System (ARS), gekoppelt werden, so dass die Echzeit-Kollaborationsplattform über die horizontalen Kommunikationsdienste hinaus beispielsweise für unternehmensübergreifende Ansagen, Warnhinweise oder dergleichen genutzt werden kann. Die sogenannten Echtzeit-Ansagesysteme (RTA) bzw. Alarm Response Systeme (ARS) werden beispielsweise in Unternehmen über eigens hierfür bestimmte Plattformen genutzt. Wie bereits erwähnt, können RTA-Systeme in der Industrie zu Sicherheitszwecken eingesetzt werden. Die von den RTA-Systemen bereitgestellten Dienste sind jedoch vielseitig einsetzbar, z. B. um vor Gefahrsituationen zu warnen oder Mitarbeiter darauf aufmerksam zu machen. Im Falle einer akuten Gefahr können dann Warnhinweise über akustische Ausgabevorrichtungen wie Lautsprecheranlagen ausgegeben werden, welche z. B. in dem Unternehmen oder öffentlichen Gebäuden oder Anlagen installiert sind. Eine weitere Möglichkeit der Verbreitung von Warnhinweisen besteht auch über eine Anzeige auf mobilen Geräten von Nutzern, was beispielsweise durch Verwenden einer entsprechenden Applikation beispielsweise auf einem mobilen Endgerät wie ein Mobiltelefon, insbesondere ein Smartphone, realisiert werden kann.

Gemäß der Erfindung wird ermöglicht, die oben beschriebenen Dienste in die Echtzeit-Kollaborationsplattform zu integrieren, so dass deren Anwendungsmöglichkeiten erweitert werden, wobei sich aus der erfindungsgemäßen Konfiguration insgesamt eine Vielzahl von Anwendungsfällen ergibt, welche weiter unten noch im Detail beschrieben werden.

Gemäß einer bevorzugten Ausführungsform umfasst das Media-Gateway eine Schnittstelle zu einem WebRTC-Kommunikationssystem.

Gemäß einer weiteren bevorzugten Ausführungsform ist das Ansagesystem ein Echtzeit-Ansagesystem, insbesondere ein Alarm-Response-System (ARS).

Weiterhin ist es bevorzugt, wenn der Echtzeit-Ansage-Adapter mit einem Media-Gateway versehen ist, welches angepasst ist, um Protokolle von WebRTC-Mediaverbindungen H.323- oder SIP-fähig zu machen.

Gemäß noch einer weiteren bevorzugten Ausführungsform ist und das um den RTA-Adapter erweiterte Media-Gateway angepasst, um den Inhalt der vorbestimmten Session zu erhalten, wenn ein Client des Echtzeit-Ansagesystems in die vorbestimmte Session eingebunden wird, um einen Mediastrom, insbesondere einen Audiostream zu rendern, welcher über die Ausgabevorrichtungen ausgegeben werden soll.

Vorzugsweise ist der RTA-Adapter angepasst, um ein Starten und Stoppen eines RTA-Aufrufs auf Anfrage eines Nutzers der Echtzeit-Kollaborationsplattform zu steuern.

Ferner können der Mediaserver und das um den RTA-Adapter erweiterte Media-Gateway angepasst sein, um die vorbestimmte Session mit RTA-Diensten aufzuzeichnen.

Darüber hinaus ist es bevorzugt, wenn der Mediaserver und das um den RTA-Adapter erweiterte Media-Gateway angepasst sind, um eine aufgezeichnete Session wiederzugeben.

Gemäß einer weiteren bevorzugten Ausführungsform weist die Echtzeit-Kollaborationsplattform Mittel zum Ausführen einer Audio- und/oder Videokonferenz auf, wobei die Mittel angepasst sind, um sich mit Freisprecheinrichtungen, insbesondere mit Telefonlautsprechern, Kameras und Monitoren in einem Konferenzraum zu verbinden.

Die Mediaströme umfassen vorzugsweise Audioströme und Videoströme. Weiterhin kann der Echtzeit-Ansage-Adapter angepasst sein, um den Mediaserver mit visuellen Ausgabevorrichtungen zu verbinden, so dass die Videoströme über die visuellen Ausgabevorrichtungen ausgebbar sind. Gemäß einer bevorzugten Ausführungsform umfasst die Echtzeit-Kollaborationsplattform eine Special Device Federation/Configuration-Einheit, welche angepasst ist, um den Mediaserver mit visuellen Ein-/Ausgabevorrichtungen zu verbinden, so dass die Videoströme über die Ein-/Ausgabevorrichtungen anwendungsspezifisch nutzbar sind.

Vorzugsweise macht die Special Device Federation/Configuration-Einheit die Ein- und Ausgaben von Audio- und Videoströmen anwendungsspezifisch nutzbar.

Erfindungsgemäß wird darüber hinaus ein Verfahren zum Ausgeben von Mediaströmen über ein Echtzeit-Ansagesystem bereitgestellt, wobei das Verfahren die folgenden Schritte umfasst: Starten einer Kollaborations-Session auf einer Echtzeit-Kollaborationsplattform; Weiterleiten von zumindest einem Audiostream der Kollaborations-Session über einen Mediaserver der Kollaborationsplattform über ein um einen Echtzeit-Ansage-Adapter erweitertes Media-Gateway; und Weiterleiten des Audiostreams über den Echtzeit-Ansage-Adapter zu damit verbundenen akustischen Ein-/Ausgabevorrichtungen, so dass Mediaströme der Kollaborations-Session über die Audiovorrichtungen nutzbar sind.

Gemäß bevorzugten Ausführungsformen, kann das Verfahren weiterhin die folgenden Schritte umfassen:
- Weiterleiten eines Audiostreams der Kollaborations-Session über einen Mediaserver der Kollaborationsplattform über eine Konferenzraumeinrichtung;
- Weiterleiten eines Audiostreams zu damit verbundenen akustischen Ein-/Ausgabevorrichtungen des Konferenzraumsystems, so dass Audioströme der Kollaborations-Session über diese Vorrichtungen nutzbar sind;
- Weiterleiten eines Videostreams der Kollaborations-Session über einen Mediaserver der Kollaborationsplattform über eine Konferenzraumeinrichtu ng;
- Weiterleiten des Videostreams über die Konferenzraumeinrichtung zu damit verbundenen visuellen Ein-/Ausgabevorrichtungen, so dass die Videoströme der Kollaborations-Session über die Vorrichtungen nutzbar sind; und/oder
- anwendungsspezifisches Konfigurieren zur selektiven Übermittlung von Audio- und Vidiostreams von Audio- und Videoquellen und - Senken an eine Kommunikations- und Kollaborationsplattform über mindestens ein Echtzeit-Ansagesystem und optional eines Konferenzraumsystems durch eine Special Device Federation/Configuration-Einheit.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. In diesem Sinne können Merkmale verschiedener Ausführungsbeispiele grundsätzlich stets miteinander kombiniert werden, und die Kombination kann ebenfalls als Ausführungsbeispiel der Erfindung verstanden werden.

Vorzugsweise sind dabei die akustischen Ausgabevorrichtungen Komponenten eines Echtzeit-Ansagesystems, welche von der Kollaborationsplattform aus einer aktiven Kollaborations-Session heraus über eine Special Device Ferederation/Configuration Einheit direkt ansteuerbar und konfigurierbar sind.

Im Folgenden wird die Erfindung anhand bevorzugter Ausführungsbeispiele und mit Hilfe der Figuren näher beschrieben. Dabei ist
- Fig. 1: eine schematische Darstellung einer Echtzeit-Kollaborationsplattform gemäß einer Ausführungsform der Erfindung; und
- Fig. 2: eine schematische Darstellung einer Echtzeit-Kollaborationsplattform gemäß einer weiteren Ausführungsform der Erfindung.

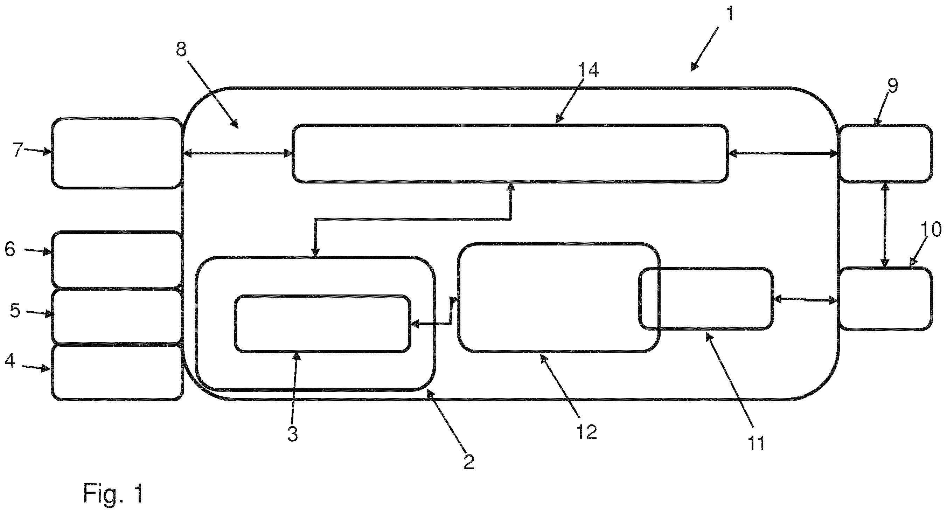

Fig. 1 ist eine schematische Darstellung einer Echtzeit-Kollaborationsplattform 1 gemäß einer Ausführungsform der Erfindung. Dargestellt sind hier die funktionalen Module bzw. Einheiten der Echtzeit-Kollaborationsplattform 1, welche im Wesentlichen den typischen Einheiten und Funktionen eines regulären Business-Echtzeit-Kollaborationssystems entsprechen. Dementsprechend umfasst die Echtzeit-Kollaborationsplattform Kommunikationsserver 2 und einen Mediaserver 3 zum selektiven Weiterleiten von Mediaströmen gemäß einem vorbestimmten Session-Inhalt einer Kommunikations- und/oder Kollaborationssession, welche auf der Echtzeit-Kollaborationsplattform 1 beispielsweise hier mittels einer entsprechenden WebRTC-basierten Server-Software, welche auf dem Kommunikationsserver 2 läuft, abgehalten werden kann bzw. abgehalten wird. Session-Kontext und die Mediaströme können hierbei über ein dediziertes Desktop, einen mobilen Client oder über einen WebRTC-konformen Web-Browser gerendert werden. Zum Beispiel können Audioströme über Telefonlautsprecher, wenn vorhanden, ausgegeben werden und Videoströme können über entsprechende Monitore ausgegeben werden. Hierzu sind der Kommunikationsserver 2 und der Mediaserver 3 mit einer Vielzahl von Kollaborationsclients, ausgestattet beispielsweise mit Lautsprechern oder Freisprecheinrichtungen und/oder Monitoren, wie z. B. dem Kollaborations-Browser-Client 4, dem Kollaborations-Desktop-Client 5 und dem mobile Kollaborations-Client 6 und mit einem Desktop-Client 7, hier beispielsweise ein sogenannter Enhanced Desktop Client 7, für Industrie-Anwendungen über ein Kommunikationsnetzwerk 8 miteinander verbunden. Der Enhanced Desktop Client 7 kann beispielsweise mit Bedienknöpfen versehen sein, die zur Ansteuerung des RTA-Systems dienen.

Weiterhin umfasst die Echtzeit-Kollaborationsplattform 1 eine Einheit 14 für die Unternehmenskollaboration ergänzende Dienste und ein RTA-System bestehend aus mindestens einem Gerät, z. B. eine Ausgabevorrichtung, und einem Ansteuerungs-Controller, welcher über eine RTA-spezifische Kommunikationsverbindung hier z. B. mit einer internetfähigen Echtzeitansage-(RTA)-Steuerung 9 verbunden ist. Die Steuerung 9 kommuniziert mit einem Echtzeitansage-(RTA)-Subsystem. Die die Unternehmenskollaboration ergänzenden Dienste umfassen Features und Funktionen, um ein Real-Time-Ansagesystem bzw. Alarm Response System zu steuern.

Das Real-Time-Ansagesystem wie oben beschrieben, im Folgenden als RTA-System bezeichnet, hier bestehend aus der RTA-Steuerung 9 und dem RTA-Subsystem 10 ist mit Ausgabevorrichtungen wie z. B. Lautsprechersystemen (nicht dargestellt) des RTA-Systems verbunden bzw. verbindbar, welche beispielsweise in einem Raum oder auf einer sonstigen Fläche oder in einem sonstigen Bereich verteilt angeordnet sein können, wie z. B. über ein ganzes Gebäude verteilt oder über eine gesamte Anlage, so dass in diesem vorbestimmten mit einem Lautsprechersystem ausgestatteten Bereich Ansagen oder Warnungen ausgegeben werden können. Neben Warnungen über potentielle Bedrohungen und Sicherheitshinweisen, könnten diese verteilten Lautsprechersysteme sinnvollerweise auch dazu verwendet werden, Lehrgänge, Schulungen, Diskussionsrunden und Ähnliches so an ein breiteres Publikum zu übertragen. Hierzu können dann beispielsweise auch mehrere RTA-Subsysteme 10 z. B. parallel eingesetzt werden.

Jedoch muss hierzu das RTA-System mit dem Business-Kontext des Kommunikationsservers 2 in Bezug auf eine vorbestimmte auf der Echtzeit-Kommunikationsplattform 1 stattfindende Kommunikationssession interagieren. Um das RTA-System beispielsweise zum Rendern von Audioströmen zu verbinden, wird ein Echtzeit-Ansagesystem-Adapter 11, im Folgenden als RTA-Adapter 11 bezeichnet, vorgesehen. Da die heutigen Echtzeit-Kollaborationssysteme 1 typischerweise auf einer WebRTC-basierten Protokoll-Architektur aufgebaut sind, welche jedoch nicht von den bestehenden RTA-Systemen unterstützt wird, sieht die Erfindung einen RTA-Adapter 11 vor, welcher hier an einem Media-Gateway 12 vorgesehen ist bzw. darin integriert ist, auf welchem auch Unternehmensmediendienste bereitgestellt werden. Diese Unternehmensmediendienste können beispielsweise unterstützende Funktionen für vertikale Kommunikationsszenarien sein. Der RTA-Adapter 11 muss die folgenden Merkmale haben bzw. Funktionen erfüllen:
- Protokollstack und Mediacodierung, welche von WebRTC abweichen, sollten kompatibel gemacht werden und Sicherungssysteme sollten angepasst bzw. transkodiert werden:
   - z. B. von WebRTC Mediaverbindungsprotokoll auf H.323, SIP oder Ähnliches,
   - z. B. von Opus-Audio-Kodierung auf G.711, G.729 oder Ähnliches.
- Session-Kontext sollte im um den RTA-Adapter 11 erweiterten Media Gateway verwaltet und ggf. bei Aufzeichnungen gesichert werden, wenn ein RTA-Client des RTA-Subsystems Teil einer Kollaborations-Session wird bzw. in eine solche einbezogen wird, um dann einen Audio-Stream, einen Video-Stream oder sonstige Bilddaten zu rendern.
- Der RTA-Adapter 11 sollte den Aufruf des RTA-Systems bestehend aus RTA-Steuerung 9 und RTA-Subsystem 10 durch einen Nutzer starten und stoppen können, z. B. basierend auf Nutzerprivilegien.
- Der RTA-Adapter 11 kann dazu ausgelegt sein, um ein Aufzeichnen von Kollaborations-Sessions mit RTA-Diensten in synchroner Weise zu ermöglichen, wobei dann auch der Mediaserver 3 dazu ausgelegt sein sollte, eine Wiedergabe der aufgezeichneten Kollaborations-Session mit RTA-Diensten in automatisierter und asynchroner Weise zu ermöglichen.

Der so ausgelegte RTA-Adapter 11 sieht die geeignete Mediation von Sicherheitssytemen wie beispielsweise die Umsetzung von Medienstromverschlüsselungen für das RTA-System vor und das Media-Gateway sieht eine Standardschnittstelle zum Mediaserver 3 des WebRTC-Kommunikationsystems vor.

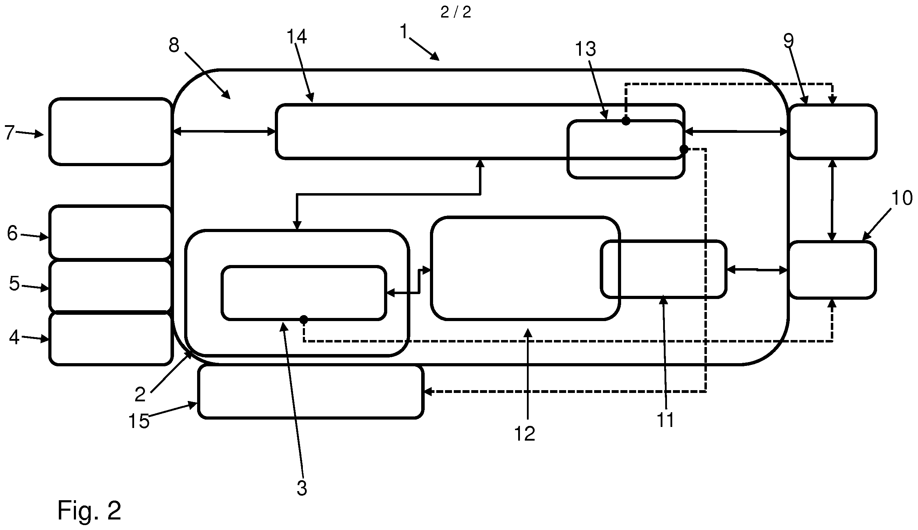

Fig. 2 ist eine schematische Darstellung einer Echtzeit-Kollaborationsplattform 1 gemäß einer weiteren Ausführungsform der Erfindung. Grundsätzlich ist die hier dargestellte Echtzeit-Kollaborationsplattform 1 wie die bereits in Fig. 1 Beschriebene aufgebaut, jedoch mit dem Unterschied, dass hier eine Konferenzraumanwendung 15, wie z. B. Circuit Meeting Room (CMR), in dem WebRTC-Kommunikationssystem bzw. auf der Echtzeit-Kollaborationsplattform 1 zum Zweck des Renderns von Videoströmen sowie zur Aufnahme oder zum Rendern von Audioströmen vorgesehen ist. Hierzu wird ferner ein sogenannter Integrations- und Interaktionsservice mit den spezialiserten Geräten oder Subsystemem zur Unterstützung von vertikalen Kommunikationsdiensten (Special Device Federation/Configuration Service 13) bereitgestellt. Der Special Device Federation/Configuration Service 13 bestückt RTA-Systems mit Konferenzraumvorrichtungen in einem Bereich von Interesse (virtuell, d. h. global verteilt) und erlaubt die Konfiguration von komplexen Audio-Rendering-Systemen für autorisierte Nutzer über ihre Clients oder über eine vorbestimmte Kollaborations-Session.

Der oben genannte CMR wird in WebRTC-basierten Unternehmenslösungen zur Echtzeit-Kollaboration, wie Circuit, implementiert, wobei sich die Konferenzapplikation mit Freisprecheinrichtungen, z. B. Telefonlautsprechern, Videokameras, z. B. Weitwinkel-HD-Videokameras und Monitoren, welche in den dafür vorgesehenen Räumen angeordnet sind, verbinden. Dabei wird CMR nahtlos in eine Circuit Session durch einen Teilnehmer der Session eingebunden, um Bildmaterial beispielsweise auf einem ersten Bildschirm mit der höchst möglichen Auflösung anzuzeigen und/oder ein Video von aktiven Teilnehmern auf einem zweiten Bildschirm (falls vorhanden) anzuzeigen. Um auch Raumlautsprechersysteme, wie sie von den RTA-Systemen genutzt werden, nahtlos in eine Circuit Session einzubinden, ist der oben bereits beschriebene RTA-Adapter 11 vorgesehen.

Eine koordinierte Kombination von RTA-Systemen mit CMR-Vorrichtungen bzw. Anwendungen schafft ein verbessertes Nutzerempfinden im Hinblick auf Audio, Video und Bildmaterial, welches in einer Konferenz für die Teilnehmer bereitgestellt wird. Die Koordination solcher Systeme wird durch den oben genannten Special Device Federantion/Configuration Dienst 13 erleichtert, welcher ein Inventar umfasst und ausgelegt ist, um sowohl die RTA-Konnektoren (nicht dargestellt) und CMR-Systeme an bestimmten Stellen zu korrelieren. RTA-Konnektoren umfassen die Verbindungen von und zum RTAcontrol sowie die des RTA-Adapters von und zum RTA-subsystem können über CMR zum Rendern und optional zur Aufnahme von Audioströmen aufgerufen werden. In diesem Fall wird CMR in einem anderen Modus hinsichtlich der Audioströme betrieben: Wenn das RTA-System Audioströme aufnimmt, z. B. über eine Mikrofonanordnung, wird die Audio-Aufnahme durch die Telefonlautsprecher automatisch auf stumm geschaltet; ansonsten wird lediglich ein Rendern von Audio zur Wiedergabe an dem Telefonlautsprecher unterdrückt.

Die Authentifizierung und Autorisation des RTA-Systems erfolgt durch das Echtzeit-Kollaborationssystem bzw. WebRTC-Kommunikationssystem, wobei das RTA-System oder das RTA-Subsystem bzw. dessen Komponenten oder Einheiten hierbei als berechtigte Rendering-Vorrichtungen erkannt werden müssen. Weiterhin können dem RTA-System oder dem RTA-Subsystem eine privilegierte Nutzergruppe, einzelne privilegierte Nutzer oder ein zugeordneter CMR zugewiesen werden, um dessen Ausstattung, also beispielsweise eine Lautsprechersystem, im Kontext einer Kollaborations-Session zu nutzen.

Die Integration von RTA-Systemen in WebRTC-basierte Echtzeit-Kollaborationsplattformen insbesondere in Zusammenhang mit Raumkonferenzsystemen, welche angepasste Audioaufnahme- und Rendering-Konzepte anwenden, erlaubt eine Vielzahl von Anwendungsmöglichkeiten in vertikalen Industrieapplikationen, von denen einige Beispiele im Folgenden beschrieben werden.

Beispielsweise kann in einem Krankenhaus eine Realtime-Session einer Beratung von Ärzten stattfinden, welche hochaufgelöste medizinische Bilddaten prüfen. Ein weiterer Experte soll hinzu gerufen werden, der im Krankenhaus unterwegs ist und gerade nicht an der Beratung teilnimmt. Aus der Realtime-Session heraus kann dieser weitere Experte nun im Krankenhaus ausgerufen werden, nämlich über das in die Echtzeit-Kollaborationsplattform 1 integrierte RTA-System bzw. dessen Ausgabevorrichtungen in Form von Lautsprechern, welche in dem Krankenhaus verteilt angeordnet sind, um zu der Beratung hinzugezogen zu werden.

Ein weiterer Anwendungsfall betrifft einen Einsatz beispielsweise der Feuerwehr, der Polizei oder dergleichen bei einer Bedrohungslage oder Gefährdungssituation, wobei der erste Responder des Einsatzes automatisch zur Teilnahme an einer Kollaborations-Session eingeladen wird, und wobei ein Notfallservice und das Alarm Response System beispielsweise Fluchtinformation für ein betroffenes Gebiet, in dem der Einsatz stattfindet, bereitstellt bzw. über die entsprechenden Ausgabevorrichtungen ausgibt. In einem erweiterten Anwendungsfall können darüber hinaus Überwachungskameras in dem betroffenen Gebiet installiert sein, welche z. B. drahtlos mit einem lokalen CMR-System verbunden werden können und so automatisch in eine vorbestimmte Session einbezogen werden können oder aktiviert werden können, um Videos von dem betroffenen Gebiet in der Kollaborations-Session anzuzueigen.

Noch ein weiterer Anwendungsfall betrifft eine Echtzeit-Kollaborations-Session in einem Unternehmen, welche z. B. über ein Lautsprecher-System in einer Werkshalle ausgegeben wird, wobei begleitend Bildmaterial oder Videos auf Bildschirmen bzw. Monitoren ausgegeben werden können, welche als Konferezraumvorrichtungen des Echtzeit-Kollaborations-Konferenzsystems, z. B. Circuit Meeting Room, vorgesehen sind. Wenn das RTA-System auch für die Audio-Aufnahme ausgelegt ist, dann kann zusätzlich ein akustisches Feedback in die Session zurückgeleitet werden, um ein realeres Nutzerempfinden zu ermöglichen.

Ein ähnliches Setup kann im Einzelhandel, beispielsweise in Supermärkten oder Kaufhäusern, verwendet werden, um Produktwerbung oder andere Werbeansagen über entsprechende Ausgabevorrichtungen auszugeben, wobei auch hier Video- oder Bildmaterial, das von einer zentralen oder regionalen Zentrale bereitgestellt wird, gleichzeitig über entsprechende Monitore ausgegeben werden kann.

Der nächste Anwendungsfall betrifft den öffentlichen Nahverkehr. Üblicherweise sind beispielsweise Bahnhöfe mit Lautsprecheranlagen und Monitoren ausgestattet, um z. B. Fahrplaninformationen an die Passagiere auszugeben. Über die Monitore könnte hier beispielsweise Bildmaterial ausgegeben werden, um alternative Routen und Empfehlungen anzuzeigen, wenn beispielsweise ein Zug ausfällt. Auch Bildschirme in einem Zug, die mit CMR verbindbar sind, könnten einem Video-Port-Multiplier ausgestattet werden, um den Passagieren entsprechendes Bildmaterial während der Fahrt zu präsentieren.

### Bezugszeichen

- 1: Kommunikations- und Kollaborationsplattform
- 2: Kommunikationsserver
- 3: Mediaserver
- 4: Kollaborations-Browser-Client
- 5: Kollaborations-Desktop-Client
- 6: mobiler Kollaborations-Client
- 7: Desktop-client für Industrie-Anwendungen
- 8: Netzwerk
- 9: RTA-Steuerung
- 10: RTA-Subsystem
- 11: RTA-Adapter
- 12: Media-Gateway
- 13: Special Device Federation/Configuration-Einheit
- 14: Einheit für die Unternehmenskollaboration ergänzende Dienste
- 15: Konferenzraumeinrichtung CMR

## Patentansprüche

1. Echtzeit-Kollaborationsplattform (1) mit einer Kollaborations-Applikation, welche angepasst ist, um es einer Anzahl von Usern zu ermöglichen, in zumindest einer Session über ein vorbestimmtes Thema miteinander über ein Netzwerk (8) zu kommunizieren, wobei die Echtzeit-Kollaborationsplattform (1) zumindest einen Mediaserver (3) mit einer selektiven Weiterleitungseinheit umfasst, welche angepasst ist zum selektiven Weiterleiten von Mediaströmen gemäß einem Inhalt einer vorbestimmten Session und eine Anzahl von Clients (4, 5, 6),
**dadurch gekennzeichnet, dass**
der Mediaserver (3) eine Schnittstelle zu einem Media-Gateway (12) mit Echtzeit-Ansage-Adapter (11) aufweist, über welche der Mediaserver (3) mit einem Ansagesystem (9, 10) mit akustischen Ausgabevorrichtungen verbindbar ist, so dass die Mediaströme einer vorbestimmten Session über Stellvertreter-Clients an die Ausgabevorrichtungen ausgebbar sind.

2. Echtzeit-Kollaborationsplattform (1) gemäß Anspruch 1, wobei das Media-Gateway (12) eine Schnittstelle zu einem WebRTC-Kommunikationssystem umfasst.

3. Echtzeit-Kollaborationsplattform (1) gemäß Anspruch 1 oder 2, wobei das Ansagesystem (9, 10) ein Echtzeit-Ansagesystem, insbesondere ein Alarm-Response-System ist.

4. Echtzeit-Kollaborationsplattform (1) gemäß einem der Ansprüche 1 bis 3, wobei der Echtzeit-Ansage-Adapter (11) angepasst ist, um Protokolle von WebRTC-Mediaverbindungen H.323- oder SIP-fähig zu machen.

5. Echtzeit-Kollaborationsplattform (1) gemäß einem der Ansprüche 1 bis 4, wobei der Mediaserver (3) und das um den RTA-Adapter (11) erweiterte Media-Gateway (12) angepasst sind, um einen Sessionkontext zu halten und bei Aufzeichnung zu speichern, wenn ein Client des Echtzeit-Ansagesystems (9, 10) in die vorbestimmte Session eingebunden wird, um einen Mediastrom, insbesondere einen Audiostream zu rendern, welcher über die Ausgabevorrichtungen ausgegeben werden soll.

6. Echzeit-Kollaborationsplattform (1) gemäß einem der Ansprüche 1 bis 5, wobei der RTA-Adapter (11) angepasst ist, um ein Starten und Stoppen eines RTA-Aufrufs auf Anfrage eines Nutzers der Echtzeit-Kollaborationsplattform (1) zu steuern.

7. Echtzeit-Kollaborationsplattform (1) gemäß einem der Ansprüche 1 bis 6, wobei der Mediaserver (3) und das um den RTA-Adapter (11) erweiterte Media-Gateway (12) angepasst sind, um die vorbestimmte Session mit RTA-Diensten aufzuzeichnen.

8. Echtzeit-Kollaborationsplattform (1) gemäß Anspruch 7, wobei der Mediaserver (3) und das um den RTA-Adapter (11) erweiterte Media-Gateway (12) angepasst sind, um eine aufgezeichnete Session wiederzugeben.

9. Echtzeit-Kollaborationsplattform (1) gemäß einem der Ansprüche 1 bis 8, wobei die Echtzeit-Kollaborationsplattform (1) Mittel zum Ausführen einer Audio- und/oder Videokonferenz aufweist, wobei die Mittel angepasst sind, um sich mit Freisprecheinrichtungen, insbesondere mit Telefonlautsprechern, Kameras und Monitoren in einem Konferenzraum zu verbinden.

10. Echtzeit-Kollaborationsplattform (10) gemäß einem der Ansprüche 1 bis 9, wobei die Mediaströme Audioströme und Videoströme umfassen, und wobei eine Special Device Federation/Configuration-Einheit (13) vorgesehen ist, welche angepasst ist um den Mediaserver (3) mit visuellen Ein-/Ausgabevorrichtungen zu verbinden, so dass die Videoströme über die Ein-/Ausgabevorrichtungen anwendungsspezifisch nutzbar sind.

11. Echtzeit-Kollaborationsplattform (10) gemäß Anspruch 10, wobei die Special Device Federation/Configuration-Einheit (13), der Mediaserver (3) und die Echtzeit-Ansage-Adapter (11) weiterhin angepasst sind, um den Mediaserver (3) mit Audio Ein-/Ausgabevorrichtungen zu verbinden, so dass die Audiooströme über die Ein-/Ausgabevorrichtungen anwendungsspezifisch nutzbar sind.

12. Echtzeit-Kollaborationsplattform (10) gemäß einem der Ansprüche 10 bis 11, wobei die Special Device Federation/Configuration-Einheit (13) vorgesehen und angepasst ist, um die Ein- und Ausgaben von Audio- und Videoströmen anwendungsspezifisch nutzbar zu machen.

13. Verfahren zum Ausgeben von Mediaströmen über ein Echtzeit-Ansagesystem (9, 10), wobei das Verfahren die folgenden Schritte umfasst:
- Starten einer Kollaborations-Session auf einer Echtzeit-Kollaborationsplattform (1) gemäß einem der Ansprüche 1 bis 12;
- Weiterleiten mindestens eines Audiostreams der Kollaborations-Session über einen Mediaserver (3) der Kollaborationsplattform (1) über ein um einen Echtzeit-Ansage-Adapter (11) erweitertes Media-Gateway (12);
- Weiterleiten des Audiostreams über den Echtzeit-Ansage-Adapter (11) zu damit verbundenen akustischen Ein-/Ausgabevorrichtungen, so dass Mediaströme der Kollaborations-Session über die Ein-/Ausgabevorrichtungen nutzbar sind.

14. Verfahren gemäß Anspruch 13, wobei das Verfahren weiterhin zumindest einen der folgenden Schritte umfasst:
- Weiterleiten eines Audiostreams der Kollaborations-Session über einen Mediaserver (3) der Kollaborationsplattform (1) über eine Konferenzraumeinrichtung (15);
- Weiterleiten eines Audiostreams zu damit verbundenen akustischen Ein-/Ausgabevorrichtungen des Konferenzraumsystems, so dass Audioströme der Kollaborations-Session über diese Vorrichtungen nutzbar sind;
- Weiterleiten eines Videostreams der Kollaborations-Session über einen Mediaserver (3) der Kollaborationsplattform (1) über eine Konferenzraumeinrichtung (15); und/oder
- Weiterleiten des Videostreams über die Konferenzraumeinrichtung (15) zu damit verbundenen visuellen Ein-/Ausgabevorrichtungen, so dass die Videoströme der Kollaborations-Session über die Vorrichtungen nutzbar sind.

15. Verfahren gemäß Anspruch 13 oder Anspruch 14, wobei das Verfahren weiterhin den folgenden Schritt umfasst
- anwendungsspezifisches Konfigurieren zur selektiven Übermittlung von Audio- und Vidiostreams von Audio- und Videoquellen und - Senken an eine Kommunikationss- und Kollaborationsplattform (1) über mindestens ein Echtzeit-Ansagesytem (10) und optional eines Konferenzraumsystems (15) durch eine Special Device Federation/Configuration-Einheit (13).

## Claims

1. Real-time collaboration platform (1) comprising a collaboration application adapted to enable a number of users to communicate with each other over a network (8) in at least one session about a predetermined topic, wherein the real-time collaboration platform (1) comprises at least one media server (3) which is adapted for selective forwarding of media streams according to a content of a predetermined session and a number of clients (4, 5, 6), **characterized in that**
the media server (3) has an interface to a media gateway (12) with a real-time announcement adapter (11), via which the media server (3) can be connected to an announcement system (9, 10) with acoustic output devices, so that the media streams of a predetermined session can be output to the output devices via substitute clients.

2. Real-time collaboration platform (1) according to claim 1, wherein the media gateway (12) comprises an interface to a WebRTC communication system.

3. Real-time collaboration platform (1) according to claim 1 or 2, wherein the announcement system (9, 10) is a real-time announcement system, in particular an alarm response system.

4. Real-time collaboration platform (1) according to any of the claims 1 to 3, wherein the real-time announcement adapter (11) is adapted to make protocols of WebRTC media connections H.323- or SIP-enabled.

5. Real-time collaboration platform (1) according to any of the claims 1 to 4, wherein the media server (3) and the media gateway (12) extended by the RTA adapter (11) are adapted to hold and store on record a session context when a client of the real-time announcement system (9, 10) is included in the predetermined session to render a media stream, in particular an audio stream, to be output via the output devices.

6. Real-time collaboration platform (1) according to any of the claims 1 to 5, wherein the RTA adapter (11) is adapted to control starting and stopping of an RTA call upon request of a user of the real-time collaboration platform (1).

7. Real-time collaboration platform (1) according to any of the claims 1 to 6, wherein the media server (3) and the media gateway (12) extended by the RTA adapter (11) are adapted to record the predetermined session with RTA services.

8. Real-time collaboration platform (1) according to claim 7, wherein the media server (3) and the media gateway (12) extended by the RTA adapter (11) are adapted to replay a recorded session.

9. Real-time collaboration platform (1) according to any of the claims 1 to 8, wherein the real-time collaboration platform (1) comprises means for conducting an audio and/or video conference, wherein the means being adapted to connect to hands-free devices, in particular telephone speakers, cameras and monitors in a conference room.

10. Real-time collaboration platform (10) according to any of the claims 1 to 9, wherein the media streams comprise audio streams and video streams, and wherein a Special Device Federation/Configuration unit (13) is provided which is adapted to connect the media server (3) to visual input/output devices such that the video streams are usable via the input/output devices in an application-specific manner.

11. Real-time collaboration platform (10) according to claim 10, wherein the Special Device Federation/Configuration unit (13), the media server (3) and the real-time announcement adapters (11) are further adapted to connect the media server (3) to audio input/output devices such that the audio streams are usable via the input/output devices in an application-specific manner.

12. Real-time collaboration platform (10) according to any of the claims 10 to 11, wherein the Special Device Federation/Configuration unit (13) is provided and adapted to make the inputs and outputs of audio and video streams usable in an application-specific manner.

13. Method of outputting media streams via a real-time announcement system (9, 10), wherein the method comprises the steps of:
- starting a collaboration session on a real-time collaboration platform (1) according to any of the claims 1 to 12;
- forwarding at least one audio stream of the collaboration session over a media server (3) of the collaboration platform (1) via a media gateway (12) extended by a real-time announcement adapter (11);
- forwarding the audio stream via the real-time announcement adapter (11) to acoustic input/output devices connected thereto so that media streams of the collaboration session are usable via the input/output devices.

14. Method according to claim 13, wherein the method further comprises at least one of the following steps:
- forwarding an audio stream of the collaboration session via a media server (3) of the collaboration platform (1) through a conference room facility (15);
- forwarding an audio stream to associated acoustic input/output devices of the conference room system so that audio streams of the collaboration session are usable via these devices;
- forwarding a video stream of the collaboration session via a media server (3) of the collaboration platform (1) through a conference room equipment (15); and/or
- forwarding the video stream via the conference room equipment (15) to visual input/output devices connected thereto so that the video streams of the collaboration session are usable via the devices.

15. Method according to claim 13 or claim 14, wherein the method further comprising the following step
- application-specific configuring for selective transmission of audio and video streams from audio and video sources and - sending to a communication and collaboration platform (1) via at least a real-time announcement system (10) and optionally a conference room system (15) through a Special Device Federation/Configuration unit (13).

## Revendications

1. Plate-forme de collaboration en temps réel (1) comprenant une application de collaboration adaptée pour permettre à un certain nombre d'utilisateurs de communiquer les uns avec les autres par l'intermédiaire d'un réseau (8) dans au moins une session sur un sujet prédéterminé, la plate-forme de collaboration en temps réel (1) comprenant au moins un serveur de médias (3) avec une unité de retransmission sélective adaptée pour retransmettre sélectivement des flux de médias selon un contenu d'une session prédéterminée et un certain nombre de clients (4, 5, 6),
**caractérisée en ce que**
le serveur de médias (3) a une interface avec une passerelle de médias (12) avec un adaptateur d'annonces en temps réel (11) par lequel le serveur de médias (3) peut être connecté à un système d'annonces (9, 10) avec des dispositifs de sortie acoustiques, de sorte que les flux de média d'une session prédéterminée peuvent être délivrés aux dispositifs de sortie par le biais de clients de substitution.

2. Plate-forme de collaboration en temps réel (1) selon la revendication 1, dans laquelle la passerelle de médias (12) comprend une interface avec un système de communication WebRTC.

3. Plate-forme de collaboration en temps réel (1) selon la revendication 1 ou 2, dans laquelle le système d'annonces (9, 10) est un système d'annonces en temps réel, et plus particulièrement un système de réponse à une alarme.

4. Plate-forme de collaboration en temps réel (1) selon l'une des revendications 1 à 3, dans laquelle l'adaptateur d'annonces en temps réel (11) est adapté pour rendre des protocoles des connexions média WebRTC compatibles avec H.323 ou SIP.

5. Plate-forme de collaboration en temps réel (1) selon l'une des revendications 1 à 4, dans laquelle le serveur de médias (3) et la passerelle de médias (12) étendue par l'adaptateur RTA (11) sont adaptés pour maintenir et stocker un contexte de session lors de l'enregistrement lorsqu'un client du système d'annonces en temps réel (9, 10) est intégré dans la session prédéterminée pour restituer un flux de médias, en particulier un flux audio, destiné à être émis par l'intermédiaire des dispositifs de sortie.

6. Plate-forme de collaboration en temps réel (1) selon l'une des revendications 1 à 5, dans laquelle l'adaptateur RTA (11) est adapté pour commander le lancement et l'arrêt d'un appel RTA à la demande d'un utilisateur de la plate-forme de collaboration en temps réel (1).

7. Plate-forme de collaboration en temps réel (1) selon l'une des revendications 1 à 6, dans laquelle le serveur de médias (3) et la passerelle de médias (12) étendue par l'adaptateur RTA (11) sont adaptés pour enregistrer la session prédéterminée avec des services RTA.

8. Plate-forme de collaboration en temps réel (1) selon la revendication 7, dans laquelle le serveur de médias (3) et la passerelle de médias (12) étendue par l'adaptateur RTA (11) sont adaptés pour reproduire une session enregistrée.

9. Plate-forme de collaboration en temps réel (1) selon l'une des revendications 1 à 8, comprenant des moyens pour réaliser une conférence audio et/ou vidéo, lesquels sont adaptés pour se connecter à des dispositifs mains libres, notamment des haut-parleurs de téléphone, des caméras et des moniteurs dans une salle de conférence.

10. Plate-forme de collaboration en temps réel (10) selon l'une des revendications 1 à 9, dans laquelle les flux de médias comprennent des flux audio et des flux vidéo, et dans laquelle une unité de fédération/configuration de dispositifs spéciaux (13) est prévue, laquelle est adaptée pour connecter le serveur de médias (3) à des dispositifs d'entrée/sortie visuels, de sorte que les flux vidéo sont utilisables de manière spécifique à l'application par l'intermédiaire des dispositifs d'entrée/sortie.

11. Plate-forme de collaboration en temps réel (10) selon la revendication 10, dans laquelle l'unité de fédération/configuration de dispositifs spéciaux (13), le serveur de médias (3) et les adaptateurs d'annonces en temps réel (11) sont également adaptés pour connecter le serveur de médias (3) à des dispositifs d'entrée/sortie audio, de sorte que les flux audio sont utilisables de manière spécifique à l'application par le biais des dispositifs d'entrée/sortie.

12. Plate-forme de collaboration en temps réel (10) selon l'une des revendications 10 à 11, dans laquelle l'unité de fédération/configuration de dispositifs spéciaux (13) est prévue et adaptée pour rendre les entrées et sorties de flux audio et vidéo utilisables de manière spécifique à l'application.

13. Procédé pour délivrer des flux de média par l'intermédiaire d'un système d'annonces en temps réel (9, 10), comprenant les étapes suivantes :
- lancement d'une session de collaboration sur une plateforme de collaboration en temps réel (1) selon l'une des revendications 1 à 12;
- transmission d'au moins un flux audio de la session de collaboration par l'intermédiaire d'un serveur de médias (3) de la plate-forme de collaboration (1) par l'intermédiaire d'une passerelle de médias (12) étendue par un adaptateur d'annonce en temps réel (11) ;
- transmission du flux audio par l'intermédiaire de l'adaptateur d'annonce en temps réel (11) vers des dispositifs d'entrée/sortie acoustiques associés, de sorte que des flux de médias de la session de collaboration sont utilisables par l'intermédiaire des dispositifs d'entrée/sortie.

14. Procédé selon la revendication 13, comprenant également au moins une des étapes suivantes :
- transmission d'un flux audio de la session de collaboration par l'intermédiaire d'un serveur de médias (3) de la plate-forme de collaboration (1) au moyen d'un dispositif de salle de conférence (15) ;
- transmission d'un flux audio à des dispositifs d'entrée/sortie acoustiques associés du système de salle de conférence, de sorte que les flux audio de la session de collaboration sont utilisables au moyen de ces dispositifs ;
- transmission d'un flux vidéo de la session de collaboration par l'intermédiaire d'un serveur de médias (3) de la plate-forme de collaboration (1) au moyen d'un dispositif de salle de conférence (15) ;
et/ou
- transmission du flux vidéo par l'intermédiaire du dispositif de salle de conférence (15) à des dispositifs d'entrée/sortie visuels associés, de sorte que les flux vidéo de la session de collaboration sont utilisables au moyen des dispositifs.

15. Procédé selon la revendication 13 ou 14, comprenant également l'étape suivante :
- configuration spécifique à l'application pour la transmission sélective des flux audio et vidéo à partir de sources audio et vidéo et envoi à une plate-forme de communication et de collaboration (1) par l'intermédiaire d'au moins un système d'annonces en temps réel (10) et, en option, d'un système de salle de conférence (15) par une unité de fédération/configuration de dispositifs spéciaux (13).
